(19) Europäisches Patentamt
European Patent Office
Office européen des brevets

(11) **EP 4 187 472 A1**

(12) **EUROPEAN PATENT APPLICATION**
published in accordance with Art. 153(4) EPC

(43) Date of publication:
**31.05.2023 Bulletin 2023/22**

(21) Application number: **21847414.6**

(22) Date of filing: **16.06.2021**

(51) International Patent Classification (IPC):
**G06Q 30/06** (2023.01)

(52) Cooperative Patent Classification (CPC):
**G06F 18/00; G06N 3/04; G06N 3/08; G06Q 30/06**

(86) International application number:
**PCT/CN2021/100299**

(87) International publication number:
**WO 2022/017082 (27.01.2022 Gazette 2022/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.07.2020 CN 202010720817**

(71) Applicant: **Beijing Wodong Tianjun Information
Technology Co.,
Ltd.
100176 Beijing (CN)**

(72) Inventor: **WANG, Sanpeng
Beijing 100176 (CN)**

(74) Representative: **Müller-Boré & Partner
Patentanwälte PartG mbB
Friedenheimer Brücke 21
80639 München (DE)**

(54) **METHOD AND APPARATUS FOR DETECTING FALSE TRANSACTION ORDERS**

(57) Disclosed in embodiments of the present disclosure are a method and apparatus for detecting false transaction orders. An embodiment of the method comprises: acquiring an order set to be tested, each order in the order set comprising a feature of the same dimension; constructing a graph structure on the basis of the order set, each node in the graph structure representing one order, and adjacent nodes having at least one identical feature; for a target node in the graph structure, determining a real neighboring node from among all neighboring nodes of the target node; aggregating a feature of the target node with a feature of the real neighboring node to obtain an aggregated feature; and inputting the aggregated feature into a logical regression model to determine whether the target node is a false transaction order. Said embodiment achieves accuracy of detecting false transaction orders.

Fig. 2

**Description**

This patent application claims the priority of the Chinese patent application filed on July 24, 2020 with the application number of 202010720817.1 and titled "METHOD AND APPARATUS FOR DETECTING FALSE TRANSACTION ORDERS", the entity of which is incorporated by reference into this application.

TECHNICAL FIELD

Embodiments of the present disclosure relate to the field of computer technology, and in particular, to a method and apparatus for detecting a false transaction order.

BACKGROUND

There are some false transaction behaviors on e-commerce platforms. Merchants employ false transaction gangs to conduct a large number of false transactions on an e-commerce platform, so as to increase the sales and the number of reviews of goods in their own stores, to acquire more display and exposure opportunities and induce normal users to place orders. However, false transaction behaviors may disrupt the order of e-commerce platforms, mislead consumers by false sales and reviews, and have a negative impact on exposure and order placement opportunities for other normal merchants. At present, most of the existing technologies, with an order as a unit, aggregate and count related features, and acquire labels through manual labeling or model generation. The orders are arranged in isolation, and connections between the orders are not used to construct a model to predict a false transaction behavior.

Because a small number of scattered false transactions have extremely limited impact on merchants, the merchants often employ false transaction gangs to conduct large-scale false transactions. Obviously, if orders of the false transaction gangs can be corelated to each other, and orders of normal users can be corelated to each other, an accuracy of the model may be greatly improved.

SUMMARY

Embodiments of the present disclosure propose a method and apparatus for detecting a false transaction order.

In a first aspect, an embodiment of the present disclosure provides a method for detecting a false transaction order, including: acquiring a to-be-tested order set, orders in the order set including features on the same dimension; constructing a graph structure on the basis of the order set, each node in the graph structure representing one order, and the each node has at least one feature identical to a feature of an adjacent node of the each node; for a target node in the graph structure, determining real neighboring nodes from all neighboring nodes of the target node; aggregating a feature of the target node with features of the real neighboring nodes to obtain an aggregated feature; and inputting the aggregated feature into a logistic regression model to determine whether the target node is a false transaction order.

In some embodiments, the determining real neighboring nodes from all neighboring nodes of the target node, comprises: calculating a similarity between the target node and each neighboring node in the all neighboring nodes respectively; and inputting the calculated similarity into a softmax activation layer to obtain a probability value, and determining a neighboring node whose obtained probability value is greater than a first threshold as a real neighboring node.

In some embodiments, the aggregating a feature of the target node with features of the real neighboring nodes to obtain an aggregated feature, comprises: averaging the features of the real neighboring nodes to obtain an average feature; and concatenating the feature of the target node with the average feature to obtain the aggregated feature.

In some embodiments, the inputting the calculated similarity into a softmax activation layer, comprises: multiplying the calculated similarity by a first weight parameter and adding a result of the multiplying to a first deviation parameter, to obtain a first weighted sum; and inputting the first weighted sum into the softmax activation layer.

In some embodiments, the inputting the aggregated feature into a logistic regression model, comprises: multiplying the aggregated feature by a second weight parameter and adding a result of the multiplying to a second deviation parameter, to obtain a second weighted sum; and inputting the second weighted sum into a sigmoid function to obtain a probability value, and determining a target node whose obtained probability value is greater than a second threshold as the false transaction order.

In some embodiments, the first weight parameter, the first deviation parameter, the second weight parameter and the second deviation parameter are obtained through steps as follows: acquiring a sample set, a sample in the sample set comprising a sample order and a label used to indicate whether the sample order is a false transaction; selecting a sample from the sample set; calculating a similarity for a sample order in the selected sample according to the method of claim 2; after multiplying the similarity by an initial first weight parameter and adding a result of the multiplying to an initial first deviation parameter to obtain a weighted sum of the similarity, inputting the weighted sum of the similarity into the softmax activation layer to obtain a first result; calculating a sample aggregated feature according to the method of claim 1 after determining real neighboring nodes of the selected sample order based on the first result; after multiplying the sample aggregated feature by an initial second weight parameter and adding a result of the multiplying to an initial second deviation parameter to obtain a weighted sum of the sample aggregated feature, inputting the weighted sum of the sample aggregated feature into the sigmoid function to obtain a second result; calculating a loss value of the second result and the label of the sample; and performing back-propagation learning based on the loss value to obtain the first weight parameter, the first deviation parameter, the second weight parameter and the second deviation parameter.

In some embodiments, the method further comprises: setting another node other than the target node in the graph structure as a target node; determining the real neighboring nodes from all the neighboring nodes of the target node; aggregating the feature of the target node with the features of the real neighboring nodes to obtain the aggregated feature; and inputting the aggregated feature into the logistic regression model to determine whether the target node is the false transaction order.

In a second aspect, some embodiments of the present disclosure provide an apparatus for detecting a false transaction order, the apparatus includes: an acquisition unit, configured to acquire a to-be-tested order set, orders in the order set comprising features on same dimensions; a construction unit, configured to construct a graph structure on the basis of the order set, each node in the graph structure representing one order, and the each node has at least one feature identical to a feature of an adjacent node of the each node; a determining unit, configured to, for a target node in the graph structure, determine real neighboring nodes from all neighboring nodes of the target node; an aggregation unit, configured to aggregate a feature of the target node with features of the real neighboring nodes to obtain an aggregated feature; and a detection unit, configured to input the aggregated feature into a logistic regression model to determine whether the target node is a false transaction order.

In some embodiments, the determining unit is further configured to: calculate a similarity between the target node and each neighboring node in the all neighboring nodes respectively; and input the calculated similarity into a softmax activation layer to obtain a probability value, and determine a neighboring node whose obtained probability value is greater than a first threshold as a real neighboring node.

In some embodiments, the aggregation unit is further configured to: average the features of the real neighboring nodes to obtain an average feature; and concatenate the feature of the target node with the average feature to obtain the aggregated feature.

In some embodiments, the determining unit is further configured to: multiply the calculated similarity by a first weight parameter and add a result of the multiplying to a first deviation parameter to obtain a first weighted sum; and input the first weighted sum into the softmax activation layer.

In some embodiments, the detection unit is further configured to: multiply the aggregated feature by a second weight parameter and add a result of the multiplying to a second deviation parameter, to obtain a second weighted sum; and input the second weighted sum into a sigmoid function to obtain a probability value, and determine a target node whose obtained probability value is greater than a second threshold as the false transaction order.

In some embodiments, the apparatus further comprises a training unit, and the training unit is configured to: acquire a sample set, a sample in the sample set comprising a sample order and a label used to indicate whether the sample order is a false transaction; select a sample from the sample set; calculate a similarity based on the selected sample order; after multiplying the similarity by an initial first weight parameter and adding a result of the multiplying to an initial first deviation parameter to obtain a weighted sum of the similarity, input the weighted sum of the similarity into the softmax activation layer to obtain a first result; calculate a sample aggregated feature according to the method of claim 1 after determining real neighboring nodes of the selected sample order based on the first result; after multiplying the sample aggregated feature by an initial second weight parameter and adding a result of the multiplying to an initial second deviation parameter to obtain a weighted sum of the sample aggregated feature, input the weighted sum of the sample aggregated feature into the sigmoid function to obtain a second result; calculate a loss value of the second result and the label of the sample; and perform back-propagation learning based on the loss value to obtain the first weight parameter, the first deviation parameter, the second weight parameter and the second deviation parameter.

In some embodiments, the apparatus further comprises a cycling unit, the cycling unit is configured to: set another node other than the target node in the graph structure as a target node; determine real neighboring nodes from all neighboring nodes of the target node; aggregate the feature of the target node with the features of the real neighboring nodes to obtain the aggregated feature; and input the aggregated feature into the logistic regression model to determine whether the target node is the false transaction order.

In a third aspect, some embodiments of the present disclosure provide an electronic device for detecting a false transaction order, the method includes: one or more processors; and a storage apparatus, storing one or more programs thereon, the one or more programs, when executed by the one or more processors, cause the one or more processors to implement the method according to any one of first aspect.

In a fourth aspect, some embodiments of the present disclosure provide a computer readable medium, storing a computer program thereon, wherein, the program, when executed by a processor, implements the method according to any one of the first aspect.

The method and apparatus for detecting a false transaction order provided by embodiments of the present disclosure, are used to find valid edges from a large number of edges commonly used in anti-cheating and anti-false transaction scenarios. Compared with GraphSage (Graph Sample and aggregate), GAT (Graph Attention Networks) random sampling neighbors, the method of the present disclosure is to construct a Gate structure to determine whether the current node has a valid edge with a neighboring node. Also sampling neighboring nodes, the neighboring nodes extracted by the method of the present disclosure are more accurate. In addition, the Gate has parameters that can be learned, and by training a model, an appropriate threshold may be found, thereby more accurately identifying cheating and false transaction behaviors.

BRIEF DESCRIPTION OF THE DRAWINGS

After reading detailed descriptions of non-limiting embodiments with reference to the following accompanying drawings, other features, objectives, and advantages of the present disclosure will become more apparent:

Fig. 1 is an example system architecture diagram to which an embodiment of the present disclosure may be applied;

Fig. 2 is a flowchart of a method for detecting a false transaction order according to an embodiment of the present disclosure;

Fig. 3a and Fig. 3b are schematic diagrams of an application scenario of the method for detecting a false transaction order according to the present disclosure;

Fig. 4 is a flowchart of the method for detecting a false transaction order according to another embodiment of the present disclosure;

Fig. 5 is a schematic structural diagram of an apparatus for detecting a false transaction order according to an embodiment of the present disclosure; and

Fig. 6 is a schematic structural diagram of a computer system of an electronic device suitable for implementing embodiments of the present disclosure.

DETAILED DESCRIPTION OF EMBODIMENTS

Embodiments of the present disclosure will be further described in detail below with reference to the accompanying drawings. It should be understood that the detailed embodiments described herein are only used to explain the related disclosure, but not to limit the present disclosure. In addition, it should be noted that, for the convenience of description, only the parts related to the related disclosure are shown in the accompanying drawings.

It should be noted that embodiments in the present disclosure and features in the embodiments may be combined with each other on a non-conflict basis. Embodiments of the present disclosure will be described below in detail with reference to the accompanying drawings.

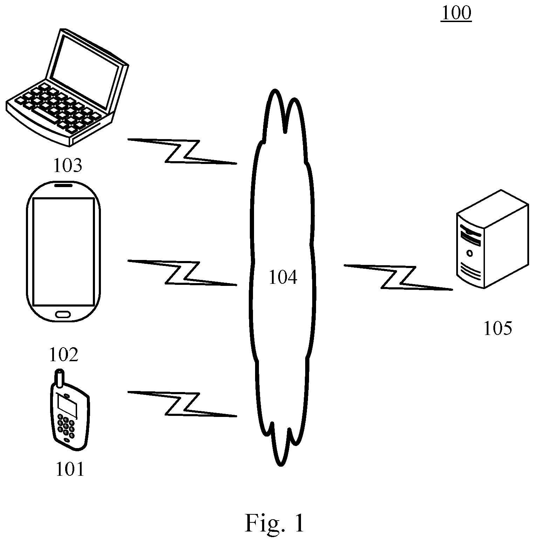

Fig. 1 shows an example system architecture 100 to which a method for detecting a false transaction order or an apparatus for detecting a false transaction order according to embodiments of the present disclosure may be applied.

As shown in Fig. 1, the system architecture 100 may include terminal device(s) 101, 102, 103, a network 104 and a server 105. The network 104 serves as a medium providing a communication link between the terminal device(s) 101, 102, 103 and the server 105. The network 104 may include various types of connections, such as wired or wireless communication links, or optical cables.

A user may use the terminal device(s) 101, 102, 103 to interact with the server 105 through the network 104 to receive or send messages or the like. Various communication client applications may be installed on the terminal device(s) 101, 102, 103, such as shopping applications, web browser applications, search applications, instant communication tools, email clients, or social platform software.

The terminal device(s) 101, 102, 103 may be hardware or software. When the terminal device(s) 101, 102, 103 are hardware, they may be various electronic devices having display screens and supporting web browsing, including but not limited to smart phones, tablet computers, e-book readers, MP3 players (Moving Picture Experts Group Audio Layer III), MP4 (Moving Picture Experts Group Audio Layer IV) players, laptops and desktops, etc. When the terminal device(s) 101, 102, 103 are software, they may be installed in the electronic devices listed above. They may be implemented as a plurality of software or software modules (e.g., for providing distributed services), or as a single software or software module, which is not limited herein.

The server 103 may be a server that provides various services, such as a backend transaction server that provides support for network transactions performed on the terminal device(s) 101, 102, 103. The backend transaction server may process such as analyze data such as received orders, and detect whether the transaction is a virtual transaction.

It should be noted that the server may be hardware or software. When the server is hardware, it may be implemented as a distributed server cluster composed of a plurality of servers, or may be implemented as a single server. When the server is software, it may be implemented as a plurality of software or software modules (for example, a plurality of software or software modules for providing distributed services), or may be implemented as a single software or software module, which is not limited herein.

It should be appreciated that, the method for detecting a false transaction order provided by embodiments of the present disclosure is generally performed by the server 105, correspondingly, the apparatus for detecting a false transaction order is generally provided in the server 105.

It should be understood that the numbers of terminal devices, networks, and servers in Fig. 1 are merely illustrative. Any number of terminal devices, networks, and servers may be provided according to implementation needs.

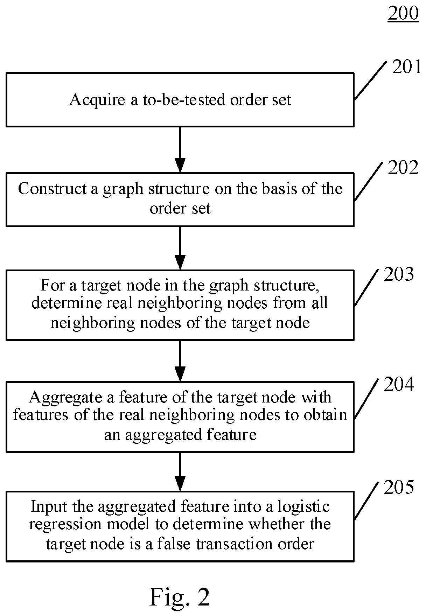

With further reference to Fig. 2, illustrating a flow 200 of a method for detecting a false transaction order according to an embodiment of the present disclosure. The method for detecting a false transaction order includes the following steps:

Step 201, acquiring a to-be-tested order set.

In the present embodiment, an executing body (for example, the server shown in Fig. 1) of the method for detecting a false transaction order may receive an order set from a terminal through a wired connection or a wireless connection, where users conduct transactions through the terminal. Orders in the order set have features on same dimensions. The features may include information such as an IP address, a shipping address, a receipt address, a recipient, or a device ID. Each order has a plurality of dimensions and may exceed 100 dimensions.

Step 202, constructing a graph structure on the basis of the order set.

In the present embodiment, each node in the graph structure represents an order, and each node has at least one feature identical to a feature of an adjacent node thereof. Extracting valid edges may be done in the process of constructing the graph structure, or may be dynamically adjusted when generating neighboring nodes for a node after the graph structure is constructed. However, it is difficult to filter valid edges by condition before constructing the graph structure. If a model is built, the first problem is that labels are difficult to determine, and the second problem is that one more model is constructed, resulting in a waste of resources and processes. If parameters are used to dynamically generate valid edges in a sampling process, then the parameters may be learned through reverse learning based on labels of the nodes, and a model may be formed with Graph Neural Network, and the flow is simpler.

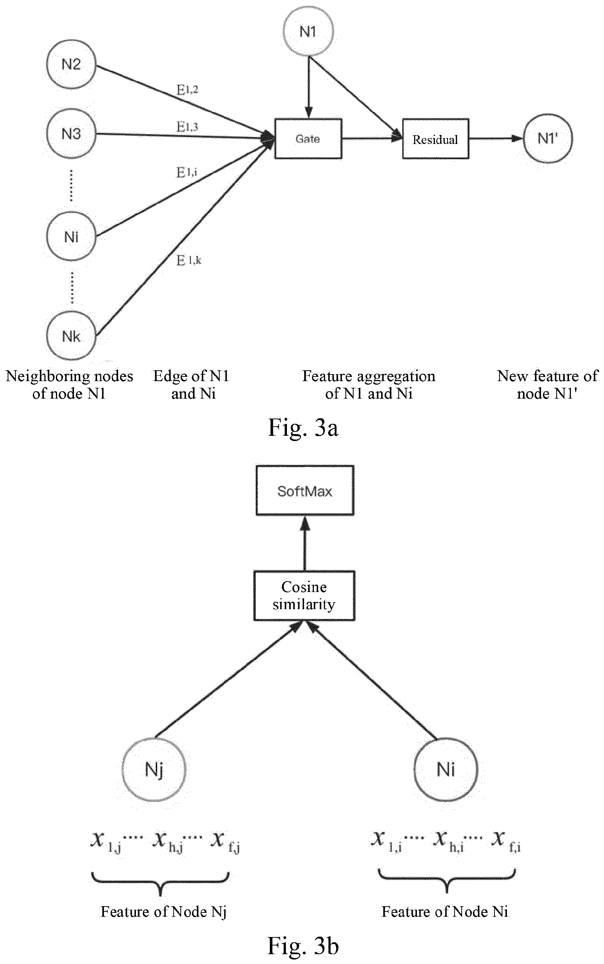

Fig. 3a represents a flow in a Gate neighbor sampling process, where N1 to Nk are nodes in a graph structure, each representing an order, and N2 to Nk are neighboring nodes of node N1. Each order has many features (the number of dimensions > 100); $E^{1,2}$ to $E^{1,k}$ are edges between the nodes, and the edges represent that there is an association (such as the same ip, same device, and/or the same receipt community) between the orders. The original GraphSage, or GAT sampling process is to sample a fixed number of neighboring nodes for the current node (N1 in Fig. 3a) from all the neighboring nodes (N2 to Nk in Fig. 3a). For example, when extracting neighboring nodes from all nodes, 30 neighboring nodes are extracted. If the number of the neighboring nodes of the current node exceeds 30, then 30 neighboring nodes are randomly extracted therefrom, or if the number of the neighboring nodes of the current node is less than 30, then all the neighboring nodes are extracted, and nulls are added until 30 neighboring nodes is obtained.

Step 203, for a target node in the graph structure, determining real neighboring nodes from all neighboring nodes of the target node.

In the present embodiment, the target node may be any node in the graph structure. Compared with the random sampling of GraphSag and GAT, the present disclosure extracts all the neighboring nodes of the current node, then calculates a similarity between a feature of each neighboring node and a feature of the current node, and determines a neighboring node whose similarity is greater than a predetermined threshold as a real neighboring node. Alternatively, the similarity may be imported into an activation layer as an input, so as to determine whether the current node and the neighboring node are similar enough (Fig. 3b shows the Gate structure in Fig. 3a), and then obtain whether the current node and the neighboring node have a correct edge, which may be expressed by the following formula. Here, Real-Neighbors(Ni) represents real neighboring nodes of Ni. Neighbors(Ni) represent all the neighboring nodes of Ni. Gate(Nj,Ni) represents the process of determining whether there is a correct edge between the two nodes Nj and Ni.

$$\mathrm{RealNeighbors(Ni) = Neighbor(Ni) * Gate(Nj, Ni)}$$

$$\forall i \in \{1, 2, ... N\}$$

where N represents the number of nodes in the graph structure.

$$\forall j \in \text{Neighbor(Ni)}$$

As shown in Fig. 3b, Cosine is the cosine similarity, which is used to calculate the similarity between the features of two nodes. Other methods may also be used to calculate the similarity, for example, Euclidean distance, Hamming distance, etc.

The similarity result is imported into an activation layer constructed by SoftMax, and an output is a two-dimensional array, where the first dimension represents a probability of label 0 (there is no valid edge), and the second dimension represents a probability of label 1 (there is a valid edge). Next, ArgMax is introduced to find out an output category result, the result being 0 represents that there is no valid edge, and the result being 1 represents that there is a valid edge.

$$\text{Gate(Nj, Ni)} = \text{ArgMax}(\text{SoftMax}(W_{Gate} * Cosine(Nj, Ni) + B_{Gate}))$$

$W_{Gate}$ represents a first weight parameter, and $B_{Gate}$ represents a first deviation parameter. The first weight parameter and the first deviation parameter may be obtained by reverse learning through a flow 400.

Step 204, aggregating a feature of the target node with features of the real neighboring nodes to obtain an aggregated feature.

In the present embodiment, as shown in Fig. 3a, $Ni'$ is a result of aggregating the feature of the node itself and the features of the neighboring nodes. Residual is used to represent a method for solving the problem of gradient disappearance caused by too many layers in deep learning. Different aggregation functions may be used, such as average aggregation, GCN (Graph Convolutional Network) inductive aggregation, LSTM (Long Short-Term Memory) aggregation, or pooling aggregator.

For example, by using average aggregation:

$$Ni' = \text{Residual}\big(Ni, \text{RealNeighbors(Ni)}\big)$$

$$= \text{CONCAT}(Ni, \text{MEAN}\big(\text{RealNeighbors(Ni)}\big))$$

CONCAT represents concatenation, and MEAN represents averaging. First, averaging the features of the neighboring nodes on each dimension, and then performing nonlinear transformation after concatenating the result of the averaging with the feature of the target node.

Step 205, inputting the aggregated feature into a logistic regression model, to determine whether the target node is a false transaction order.

In the present embodiment, the aggregated feature may be directly input into the logistic regression model to obtain a classification result, or the aggregated feature may be multiplied by a second weight parameter and after that added to a second deviation parameter to obtain a second weighted sum; and the second weighted sum is input into the logistic regression model to obtain the classification result. The logistic regression model may be a sigmoid function, and the classification result is a probability of being a false transaction order. If the probability is greater than a predetermined threshold, the target node is considered to be a false transaction order. The target node may also be replaced, and steps 202-205 are performed again.

$$\text{Score} = \text{Sigmoid}(W_{output} * Ni' + B_{output})$$

where, Score is used to represent the classification result. $W_{output}$ represents the second weight parameter, and $B_{output}$ represents the second deviation parameter. The second weight parameter and the second deviation parameter may be obtained by reverse learning through the flow 400.

Effects of the technical solution of the present disclosure may be verified on the basis of anti-false transaction historical data. The label is 1 if an order is identified as a false transaction. A training set may use orders in five days, a test set may use a orders in one day other than the five days, and a judgment standard is AUC (model evaluation index) of the test set.

| Model | AUC |
|---|---|
| GCN | 0.918 |
| GraphSage (sampling-30) | 0.915 |
| GAT (sampling-30) | 0.926 |
| Method of the present disclosure | 0.933 |

It can be seen that the method of the present disclosure can obtain a better detection effect. The extracted neighboring nodes are more accurate. The method of the present disclosure has parameters that can be learned, and by training a model, an appropriate threshold could be found, thereby more accurately identifying cheating and false transaction behaviors.

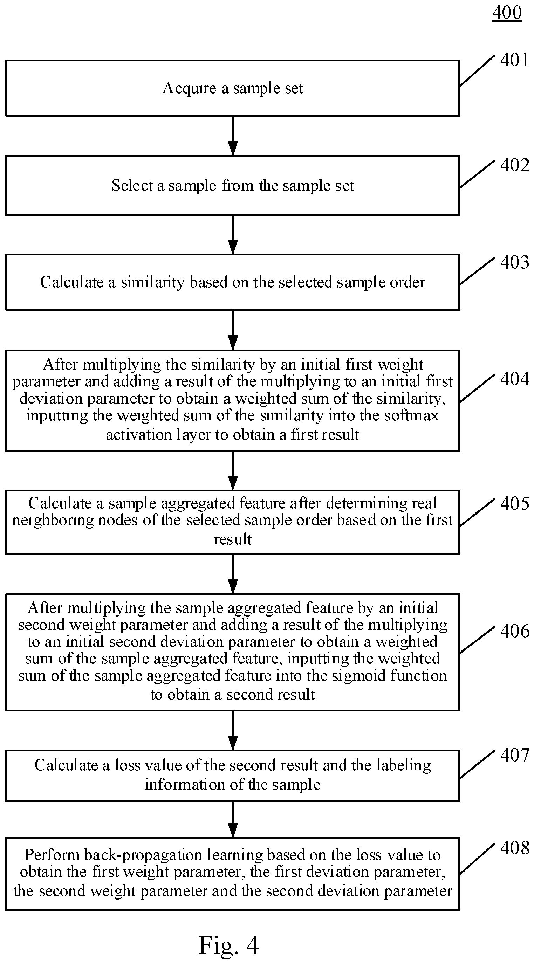

With further reference to Fig. 4, illustrating the flow 400 of another embodiment of the method for detecting a false transaction order. The flow 400 of the method for detecting a false transaction order includes the following steps: Step 401, acquiring a sample set.

In the present embodiment, the executing body of the training steps may acquire the sample set locally or remotely from other electronic devices connected to the executing body through a network. Each sample includes a sample order and a label used to indicate whether the sample order is a false transaction. For example, whether a sample order is a false transaction order may be manually labeled. Here, the label used to indicate whether the sample order is a false transaction order may be in various forms.

As an example, the label may be a numerical value, for example, 0 is used to represent that the sample order is not a false transaction order, and 1 is used to represent that the sample order is a false transaction order.

Step 402, selecting a sample from the sample set.

In the present embodiment, the executing body may select the sample from the sample set acquired in step 201, and perform the training steps from step 403 to step 408. The method for selecting and the number of the samples are not limited in the present disclosure. For example, at least one sample may be randomly selected, or a sample having a larger number of neighboring nodes of the sample order may be selected from the sample set.

Step 403, calculating a similarity based on the selected sample order.

In the present embodiment, another sample order having at least one feature identical to at least one feature of the selected sample order may be found based on the selected sample order and then used as neighboring orders of the sample order. The graph structure is constructed based on the sample order and the neighboring orders, and then the sample order is used as a target node to calculate the similarity between the target node and all the neighboring nodes. If there are a plurality of neighboring nodes, than a plurality of similarities may be calculated.

Step 404, after the similarity is multiplied by an initial first weight parameter and then added to an initial first deviation parameter to obtain a weighted sum of the similarity, inputting the weighted sum of the similarity into the softmax activation layer to obtain a first result.

In the present embodiment, initial values of the first weight parameter and the first deviation parameter may be preset. After calculating a weighted sum of the similarity, the weighted sum is input into the softmax activation layer to obtain the first result. The first result is 0 or 1. 1 represents that there is a valid edge between a node corresponding to a sample order (referred to as a sample node) and a node corresponding to the neighboring order, and 0 represents that there is no valid edge between the node corresponding to the sample order and the node corresponding to the neighboring order. If there are multiple neighboring nodes, a first result may be obtained for each neighboring node.

Step 405, calculating a sample aggregated feature after the real neighboring nodes of the selected sample order are determined based on the first result.

In the present embodiment, real neighboring orders of the sample node may be determined based on the first result. The features of the sample node and the real neighboring nodes may be aggregated according to the method of step 204 to obtain the sample aggregated feature.

Step 406, after the sample aggregated feature is multiplied by an initial second weight parameter and then added to an initial second deviation parameter to obtain a weighted sum the sample aggregated feature, inputting the weighted sum of the sample aggregated feature into the sigmoid function to obtain a second result.

In the present embodiment, after calculating the weighted sum of the sample aggregated feature and then inputting the weighted sum into the sigmoid function, a probability that the sample node is a false transaction order may be obtained, that is, the second result.

Step 407, calculating a loss value of the second result and the label of the sample.

In the present embodiment, the loss value may be calculated based on a preset loss function.

Step 408, performing back-propagation learning based on the loss value to obtain the first weight parameter, the first deviation parameter, the second weight parameter and the second deviation parameter.

In the present embodiment, if the loss value does not reach a target value, back-propagation learning is performed based on the loss value to obtain the first weight parameter, the first deviation parameter, the second weight parameter and the second deviation parameter. The method of back-propagation is existing technology, and detailed description thereof will be omitted.

As can be seen from Fig. 4, compared with the embodiment corresponding to Fig. 2, the flow 400 of the method for detecting a false transaction order in the present embodiment embodies the process of learning parameters, and by training a model, an appropriate threshold may be found, thereby more accurately identifying cheating and false transaction behaviors.

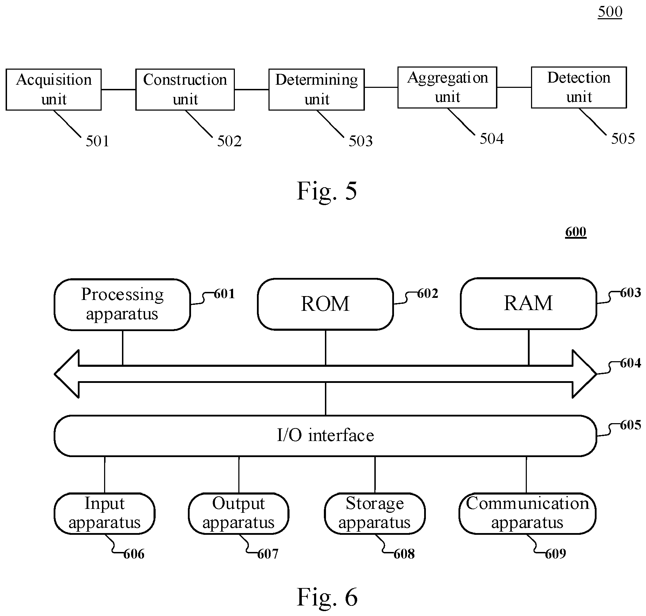

With further reference to Fig. 5, as an implementation of the method shown in the above figures, an embodiment of the present disclosure provides an apparatus for detecting a false transaction order, and the apparatus embodiment corresponds to the method embodiment shown in Fig. 2. The apparatus may be applied to various electronic devices.

As shown in Fig. 5, the apparatus 500 for detecting a false transaction order in the present embodiment includes: an acquisition unit 501, a construction unit 502, a determining unit 503, an aggregation unit 504, and a detection unit 505. The acquisition unit 501 is configured to acquire a to-be-tested order set, orders in the order set including features on same dimensions. The construction unit 502 is configured to construct a graph structure on the basis of the order set, each node in the graph structure representing one order, and the each node has at least one feature identical to a feature of an adjacent node of the each node. The determining unit 503 is configured to, for a target node in the graph structure, determine real neighboring nodes from all neighboring nodes of the target node. The aggregation unit 504 is configured to aggregate a feature of the target node with features of the real neighboring nodes to obtain an aggregated feature. The detection unit 505 is configured to input the aggregated feature into a logistic regression model to determine whether the target node is a false transaction order.

In the present embodiment, for the specific processing of the acquisition unit 501, the construction unit 502, the determining unit 503, the aggregation unit 504, and the detection unit 505 in the apparatus 500 for detecting a false transaction order, reference may be made to step 201, step 202, step 203, step 204, and step 205 in the corresponding embodiment of Fig. 2.

In some alternative implementations of the present embodiment, the determining unit 503 is further configured to: calculate a similarity between the target node and each neighboring node in the all neighboring nodes respectively; and input the calculated similarity into a softmax activation layer to obtain a probability value, and determine a neighboring node whose obtained probability value is greater than a first threshold as a real neighboring node.

In some alternative implementations of the present embodiment, the aggregation unit 504 is further configured to: average the features of the real neighboring nodes to obtain an average feature; and concatenate the feature of the target node with the average feature to obtain the aggregated feature.

In some alternative implementations of the present embodiment, the determining unit 503 is further configured to: multiply the calculated similarity by a first weight parameter and add a result of the multiplying to a first deviation parameter to obtain a first weighted sum; and input the first weighted sum into the softmax activation layer.

In some alternative implementations of the present embodiment, the detection unit 505 is further configured to: multiply the aggregated feature by a second weight parameter and add a result of the multiplying to a second deviation parameter to obtain a second weighted sum; and input the second weighted sum into a sigmoid function to obtain a probability value, and determine a target node whose obtained probability value is greater than a second threshold as the false transaction order.

In some alternative implementations of the present embodiment, the apparatus 500 further includes a training unit (not shown in the figure), and the training unit is configured to: acquire a sample set, a sample in the sample set including a sample order and a label used to indicate whether the sample order is a false transaction; select a sample from the sample set; calculate a similarity based on the selected sample order; after multiplying the similarity by an initial first weight parameter and adding a result of the multiplying to an initial first deviation parameter to obtain a weighted sum of the similarity, input the weighted sum of the similarity into the softmax activation layer to obtain a first result; calculate a sample aggregated feature after determining real neighboring nodes of the selected sample order based on the first result; after multiplying the sample aggregated feature by an initial second weight parameter and adding a result of the multiplying to an initial second deviation parameter to obtain a weighted sum of the sample aggregated feature, input the weighted sum of the sample aggregated feature into the sigmoid function to obtain a second result; calculate a loss value of the second result and the label of the sample; and perform back-propagation learning based on the loss value to obtain the first weight parameter, the first deviation parameter, the second weight parameter and the second deviation parameter.

In some alternative implementations of the present embodiment, the apparatus 500 further includes a cycling unit, configured to: set another node other than the target node in the graph structure as a target node determine real neighboring nodes from all neighboring nodes of the target node; aggregate the feature of the target node with the features of the real neighboring nodes to obtain the aggregated feature; and input the aggregated feature into the logistic regression model to determine whether the target node is the false transaction order.

Referring next to Fig. 6, illustrating a schematic structural diagram of an electronic device (e.g., the server or terminal device in Fig. 1) 600 suitable for implementing embodiments of the present disclosure. Terminal devices in the embodiments of the present disclosure may include, but are not limited to, mobile terminals such as mobile phones, notebook computers, digital broadcast receivers, PDAs (Personal Digital Assistants), PADs (Portable Android Devices), PMPs (Portable Multimedia Players), vehicle-mounted terminals (such as vehicle-mounted navigation terminals), and stationary terminals such as digital TVs, or desktop computers. The terminal device/server shown in Fig. 6 is only an example, and should not impose any limitation on the function and scope of use of the embodiments of the present disclosure.

As shown in Fig. 6, the electronic device 600 may include a processing apparatus (such as a central processing unit, a graphics processor) 601, which may execute various appropriate actions and processes in accordance with a program stored in a read-only memory (ROM) 602 or a program loaded into a random access memory (RAM) 603 from a storage apparatus 608. The RAM 603 also stores various programs and data required by operations of the electronic device 600. The processing apparatus 601, the ROM 602 and the RAM 603 are connected to each other through a bus 604. An input/output (I/O) interface 605 is also connected to the bus 604.

Typically, the following apparatuses may be connected to the I/O interface 605: an input apparatus 606 including a touch screen, a touch pad, a keyboard, a mouse, a camera, a microphone, an accelerometer, or a gyroscope; an output apparatus 607 including such as a liquid crystal display (LCD), a speaker, or a vibrator; the storage apparatus 608 including such as a magnetic tape, or a hard disk; and a communication apparatus 609. The communication apparatus 609 may allow the electronic device 600 to perform wireless or wired communication with other devices to exchange data. Although Fig. 6 shows the electronic device 600 having various apparatuses, it should be understood, however, that not all shown apparatuses are required to be implemented or provided. More or fewer apparatuses may alternatively be implemented or provided. Each block shown in Fig. 6 may represent one apparatus, or may represent a plurality of apparatuses as needed.

In particular, according to embodiments of the present disclosure, the process described above with reference to the flow chart may be implemented in a computer software program. For example, an embodiment of the present disclosure includes a computer program product, which comprises a computer program that is hosted in a machine-readable medium. The computer program comprises program codes for executing the method as illustrated in the flow chart. In such an embodiment, the computer program may be downloaded and installed from a network via the communication portion 609, or may be installed from the storgae portion 608, or may be installed from the ROM 602. The computer program, when executed by the central processing unit (CPU) 601, implements the above mentioned functionalities as defined by the methods of the present disclosure. It should be noted that the computer readable medium in the present disclosure may be computer readable signal medium or computer readable storage medium or any combination of the above two. An example of the computer readable storage medium may include, but not limited to: electric, magnetic, optical, electromagnetic, infrared, or semiconductor systems, apparatus, elements, or a combination any of the above. A more specific example of the computer readable storage medium may include but is not limited to: electrical connection with one or more wire, a portable computer disk, a hard disk, a random access memory (RAM), a read only memory (ROM), an erasable programmable read only memory (EPROM or flash memory), a fibre, a portable compact disk read only memory (CD-ROM), an optical memory, a magnet memory or any suitable combination of the above. In some embodiments of the present disclosure, the computer readable storage medium may be any tangible medium containing or storing programs which can be used by a command execution system, apparatus or element or incorporated thereto. In some embodiments of the present disclosure, the computer readable signal medium may include data signal in the base band or propagating as parts of a carrier, in which computer readable program codes are carried. The propagating signal may take various forms, including but not limited to: an electromagnetic signal, an optical signal or any suitable combination of the above. The signal medium that can be read by computer may be any computer readable medium except for the computer readable storage medium. The computer readable medium is capable of transmitting, propagating or transferring programs for use by, or used in combination with, a command execution system, apparatus or element. The program codes contained on the computer readable medium may be transmitted with any suitable medium including but not limited to: wireless, wired, optical cable, RF medium etc., or any suitable combination of the above.

The computer readable medium may be included in the electronic device, or a stand-alone computer readable medium not assembled into the electronic device. The computer readable medium carries one or more programs. The one or more programs, when executed by the electronic device, cause the electronic device to: acquire a to-be-tested order set, orders in the order set including features on same dimensions; construct a graph structure on the basis of the order set, each node in the graph structure representing one order, and the each node has at least one feature identical to a feature of an adjacent node of the each node; for a target node in the graph structure, determine real neighboring nodes from all neighboring nodes of the target node; aggregate a feature of the target node with features of the real neighboring nodes to obtain an aggregated feature; and input the aggregated feature into a logistic regression model

to determine whether the target node is a false transaction order.

A computer program code for executing operations in some embodiments of the present disclosure may be compiled using one or more programming languages or combinations thereof. The programming languages include object-oriented programming languages, such as Java, Smalltalk or C++, and also include conventional procedural programming languages, such as "C" language or similar programming languages. The program code may be completely executed on a user's computer, partially executed on a user's computer, executed as a separate software package, partially executed on a user's computer and partially executed on a remote computer, or completely executed on a remote computer or server. In the circumstance involving a remote computer, the remote computer may be connected to a user's computer through any network, including local area network (LAN) or wide area network (WAN), or may be connected to an external computer (for example, connected through Internet using an Internet service provider).

The flow charts and block diagrams in the accompanying drawings illustrate architectures, functions and operations that may be implemented according to the systems, methods and computer program products of the various embodiments of the present disclosure. In this regard, each of the blocks in the flow charts or block diagrams may represent a module, a program segment, or a code portion, said module, program segment, or code portion comprising one or more executable instructions for implementing specified logic functions. It should also be noted that, in some alternative implementations, the functions denoted by the blocks may occur in a sequence different from the sequences shown in the figures. For example, any two blocks presented in succession may be executed, substantially in parallel, or they may sometimes be in a reverse sequence, depending on the function involved. It should also be noted that each block in the block diagrams and/or flow charts as well as a combination of blocks may be implemented using a dedicated hardware-based system executing specified functions or operations, or by a combination of a dedicated hardware and computer instructions.

The units involved in the embodiments of the present disclosure may be implemented by means of software or hardware. The described units may also be provided in a processor, for example, may be described as: a processor including an acquisition unit, a construction unit, a determining unit, an aggregation unit, and a detection unit. Here, the names of these units do not in some cases constitute limitations to such units themselves. For example, the acquisition unit may also be described as "a unit configured to acquire a to-be-tested order set".

The above description only provides an explanation of the preferred embodiments of the present disclosure and the technical principles used. It should be appreciated by those skilled in the art that the inventive scope of the present disclosure is not limited to the technical solutions formed by the particular combinations of the above-described technical features. The inventive scope should also cover other technical solutions formed by any combinations of the above-described technical features or equivalent features thereof without departing from the concept of the disclosure. Technical schemes formed by the above-described features being interchanged with, but not limited to, technical features with similar functions disclosed in the present disclosure are examples.

**Claims**

1. A method for detecting a false transaction order, the method comprising:

   acquiring a to-be-tested order set, orders in the order set comprising features on same dimensions;
   constructing a graph structure on the basis of the order set, each node in the graph structure representing one order, and the each node has at least one feature identical to a feature of an adjacent node of the each node;
   for a target node in the graph structure, determining real neighboring nodes from all neighboring nodes of the target node;
   aggregating a feature of the target node with features of the real neighboring nodes, to obtain an aggregated feature; and
   inputting the aggregated feature into a logistic regression model, to determine whether the target node is a false transaction order.

2. The method according to claim 1, wherein the determining real neighboring nodes from all neighboring nodes of the target node, comprises:

   calculating a similarity between the target node and each neighboring node in the all neighboring nodes respectively; and
   inputting the calculated similarity into a softmax activation layer to obtain a probability value, and determining a neighboring node whose obtained probability value is greater than a first threshold as a real neighboring node.

3. The method according to claim 1, wherein the aggregating a feature of the target node with features of the real neighboring nodes to obtain an aggregated feature, comprises:

averaging the features of the real neighboring nodes to obtain an average feature; and
concatenating the feature of the target node with the average feature to obtain the aggregated feature.

4.  The method according to claim 2, wherein the inputting the calculated similarity into a softmax activation layer, comprises:

multiplying the calculated similarity by a first weight parameter and adding a result of the multiplying to a first deviation parameter, to obtain a first weighted sum; and
inputting the first weighted sum into the softmax activation layer.

5.  The method according to claim 2, wherein the inputting the aggregated feature into a logistic regression model, comprises:

multiplying the aggregated feature by a second weight parameter and adding a result of the multiplying to a second deviation parameter, to obtain a second weighted sum; and
inputting the second weighted sum into a sigmoid function to obtain a probability value, and determining a target node whose obtained probability value is greater than a second threshold as the false transaction order.

6.  The method according to claim 5, wherein the first weight parameter, the first deviation parameter, the second weight parameter and the second deviation parameter are obtained through steps as follows:

acquiring a sample set, a sample in the sample set comprising a sample order and a label used to indicate whether the sample order is a false transaction;
selecting a sample from the sample set;
calculating a similarity for a sample order in the selected sample according to the method of claim 2;
after multiplying the similarity by an initial first weight parameter and adding a result of the multiplying to an initial first deviation parameter to obtain a weighted sum of the similarity, inputting the weighted sum of the similarity into the softmax activation layer to obtain a first result;
calculating a sample aggregated feature according to the method of claim 1 after determining real neighboring nodes of the selected sample order based on the first result;
after multiplying the sample aggregated feature by an initial second weight parameter and adding a result of the multiplying to an initial second deviation parameter to obtain a weighted sum of the sample aggregated feature, inputting the weighted sum of the sample aggregated feature into the sigmoid function to obtain a second result;
calculating a loss value of the second result and the label of the sample; and
performing back-propagation learning based on the loss value to obtain the first weight parameter, the first deviation parameter, the second weight parameter and the second deviation parameter.

7.  The method according to any one of claims 1-6, wherein the method further comprises:

setting another node other than the target node in the graph structure as a target node;
determining the real neighboring nodes from all the neighboring nodes of the target node;
aggregating the feature of the target node with the features of the real neighboring nodes to obtain the aggregated feature; and
inputting the aggregated feature into the logistic regression model to determine whether the target node is the false transaction order.

8.  An apparatus for detecting a false transaction order, the apparatus comprising:

an acquisition unit, configured to acquire a to-be-tested order set, orders in the order set comprising features on same dimensions;
a construction unit, configured to construct a graph structure on the basis of the order set, each node in the graph structure representing one order, and the each node has at least one feature identical to a feature of an adjacent node of the each node;
a determining unit, configured to, for a target node in the graph structure, determine real neighboring nodes from all neighboring nodes of the target node;

an aggregation unit, configured to aggregate a feature of the target node with features of the real neighboring nodes to obtain an aggregated feature; and

a detection unit, configured to input the aggregated feature into a logistic regression model to determine whether the target node is a false transaction order.

9. The apparatus according to claim 8, wherein the determining unit is further configured to: calculate a similarity between the target node and each neighboring node in the all neighboring nodes respectively; and input the calculated similarity into a softmax activation layer to obtain a probability value, and determine a neighboring node whose obtained probability value is greater than a first threshold as a real neighboring node.

10. The apparatus according to claim 8, wherein the aggregation unit is further configured to: average the features of the real neighboring nodes to obtain an average feature; and concatenate the feature of the target node with the average feature to obtain the aggregated feature.

11. The apparatus according to claim 9, wherein the determining unit is further configured to: multiply the calculated similarity by a first weight parameter and add a result of the multiplying to a first deviation parameter to obtain a first weighted sum; and input the first weighted sum into the softmax activation layer.

12. The apparatus according to claim 9, wherein the detection unit is further configured to: multiply the aggregated feature by a second weight parameter and add a result of the multiplying to a second deviation parameter, to obtain a second weighted sum; and input the second weighted sum into a sigmoid function to obtain a probability value, and determine a target node whose obtained probability value is greater than a second threshold as the false transaction order.

13. The apparatus according to claim 12, wherein the apparatus further comprises a training unit, and the training unit is configured to:

acquire a sample set, a sample in the sample set comprising a sample order and a label used to indicate whether the sample order is a false transaction;

select a sample from the sample set;

calculate a similarity based on the selected sample order;

after multiplying the similarity by an initial first weight parameter and adding a result of the multiplying to an initial first deviation parameter to obtain a weighted sum of the similarity, input the weighted sum of the similarity into the softmax activation layer to obtain a first result;

calculate a sample aggregated feature according to the method of claim 1 after determining real neighboring nodes of the selected sample order based on the first result;

after multiplying the sample aggregated feature by an initial second weight parameter and adding a result of the multiplying to an initial second deviation parameter to obtain a weighted sum of the sample aggregated feature, input the weighted sum of the sample aggregated feature into the sigmoid function to obtain a second result;

calculate a loss value of the second result and the label of the sample; and

perform back-propagation learning based on the loss value to obtain the first weight parameter, the first deviation parameter, the second weight parameter and the second deviation parameter.

14. The apparatus according to any one of claims 8-13, wherein the apparatus further comprises:

a cycling unit, configured to: set another node other than the target node in the graph structure as a target node; determine real neighboring nodes from all neighboring nodes of the target node; aggregate the feature of the target node with the features of the real neighboring nodes to obtain the aggregated feature; and input the aggregated feature into the logistic regression model to determine whether the target node is the false transaction order.

15. An electronic device for detecting a false transaction order, comprising:

one or more processors; and

a storage apparatus, storing one or more programs thereon,

the one or more programs, when executed by the one or more processors, cause the one or more processors to implement the method according to any one of claims 1-6.

16. A computer readable medium, storing a computer program thereon, wherein, the program, when executed by a processor, implements the method according to any one of claims 1-6.

Fig. 1

200

```
                                                              /201
┌─────────────────────────────────────────┐
│         Acquire a to-be-tested order set  │
└─────────────────────────────────────────┘
                      │
                      ▼
                                                              /202
┌─────────────────────────────────────────┐
│  Construct a graph structure on the basis of the │
│                 order set                  │
└─────────────────────────────────────────┘
                      │
                      ▼
                                                              /203
┌─────────────────────────────────────────┐
│    For a target node in the graph structure,    │
│  determine real neighboring nodes from all      │
│    neighboring nodes of the target node         │
└─────────────────────────────────────────┘
                      │
                      ▼
                                                              /204
┌─────────────────────────────────────────┐
│  Aggregate a feature of the target node with    │
│ features of the real neighboring nodes to obtain│
│            an aggregated feature           │
└─────────────────────────────────────────┘
                      │
                      ▼
                                                              /205
┌─────────────────────────────────────────┐
│   Input the aggregated feature into a logistic  │
│  regression model to determine whether the      │
│    target node is a false transaction order     │
└─────────────────────────────────────────┘
```

Fig. 2

N1

N2

$E_{1,2}$

N3

$E_{1,3}$

Gate

Residual

N1'

$E_{1,i}$

Ni

$E_{1,k}$

Nk

Neighboring nodes
of node N1

Edge of N1
and Ni

Feature aggregation
of N1 and Ni

New feature of
node N1'

Fig. 3a

SoftMax

Cosine
similarity

Nj

Ni

$X_{1,j} \cdots X_{h,j} \cdots X_{f,j}$

$X_{1,i} \cdots X_{h,i} \cdots X_{f,i}$

Feature of Node Nj

Feature of Node Ni

Fig. 3b

400

Acquire a sample set — 401

↓

Select a sample from the sample set — 402

↓

Calculate a similarity based on the selected sample order — 403

↓

After multiplying the similarity by an initial first weight parameter and adding a result of the multiplying to an initial first deviation parameter to obtain a weighted sum of the similarity, inputting the weighted sum of the similarity into the softmax activation layer to obtain a first result — 404

↓

Calculate a sample aggregated feature after determining real neighboring nodes of the selected sample order based on the first result — 405

↓

After multiplying the sample aggregated feature by an initial second weight parameter and adding a result of the multiplying to an initial second deviation parameter to obtain a weighted sum of the sample aggregated feature, inputting the weighted sum of the sample aggregated feature into the sigmoid function to obtain a second result — 406

↓

Calculate a loss value of the second result and the labeling information of the sample — 407

↓

Perform back-propagation learning based on the loss value to obtain the first weight parameter, the first deviation parameter, the second weight parameter and the second deviation parameter — 408

Fig. 4

500

| Acquisition unit | Construction unit | Determining unit | Aggregation unit | Detection unit |

501   502   503   504   505

## Fig. 5

600

| Processing apparatus | ~601 | ROM | ~602 | RAM | ~603 |

~604

| I/O interface | ~605 |

| Input apparatus | Output apparatus | Storage apparatus | Communication apparatus |

606   607   608   609

## Fig. 6

## INTERNATIONAL SEARCH REPORT

| International application No. |
| --- |
| **PCT/CN2021/100299** |

| A. | CLASSIFICATION OF SUBJECT MATTER |
| --- | --- |

G06Q 30/06(2012.01)i

According to International Patent Classification (IPC) or to both national classification and IPC

| B. | FIELDS SEARCHED |
| --- | --- |

Minimum documentation searched (classification system followed by classification symbols)

G06Q

Documentation searched other than minimum documentation to the extent that such documents are included in the fields searched

Electronic data base consulted during the international search (name of data base and, where practicable, search terms used)

CNKI, CNPAT, WPI, IEEE: 虚假, 作弊, 刷单, 订单, 交易, 图结构, 二分图, 二部图, 聚合, 逻辑回归, 邻居, 节点, 特征, 相似度, 异常, false transaction, transaction, aggregation, feature, graph, similarity, neighbor, node

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 111340509 A (ALIPAY (HANGZHOU) INFORMATION TECHNOLOGY CO., LTD.) 26 June 2020 (2020-06-26) description, paragraphs [0016]-[0060] | 1-17 |
| A | CN 109598563 A (BEIJING SCIENCE AND TECHNOLOGY CO., THREE FAST ONLINE) 09 April 2019 (2019-04-09) entire document | 1-17 |
| A | CN 108063810 A (ZHEJIANG UNIVERSITY OF TECHNOLOGY) 22 May 2018 (2018-05-22) entire document | 1-17 |
| A | CN 109615167 A (ALIBABA GROUP HOLDING LIMITED) 12 April 2019 (2019-04-12) entire document | 1-17 |
| A | CN 109934706 A (ALIBABA GROUP HOLDING LIMITED) 25 June 2019 (2019-06-25) entire document | 1-17 |
| A | CN 108921566 A (ALIBABA GROUP HOLDING LIMITED) 30 November 2018 (2018-11-30) entire document | 1-17 |

☑ Further documents are listed in the continuation of Box C.     ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **02 September 2021** | **16 September 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/100299**

**C.    DOCUMENTS CONSIDERED TO BE RELEVANT**

| Category* | Citation of document, with indication, where appropriate, of the relevant passages | Relevant to claim No. |
|---|---|---|
| A | CN 109191107 A (ALIBABA GROUP HOLDING LIMITED) 11 January 2019 (2019-01-11) entire document | 1-17 |
| A | US 2019130116 A1 (ALIBABA GROUP HOLDING LIMITED) 02 May 2019 (2019-05-02) entire document | 1-17 |

Form PCT/ISA/210 (second sheet) (January 2015)

**INTERNATIONAL SEARCH REPORT**
Information on patent family members

International application No.

**PCT/CN2021/100299**

| Patent document cited in search report | | | Publication date (day/month/year) | Patent family member(s) | | | Publication date (day/month/year) |
|---|---|---|---|---|---|---|---|
| CN | 111340509 | A | 26 June 2020 | CN | 111340509 | B | 21 August 2020 |
| CN | 109598563 | A | 09 April 2019 | None | | | |
| CN | 108063810 | A | 22 May 2018 | None | | | |
| CN | 109615167 | A | 12 April 2019 | None | | | |
| CN | 109934706 | A | 25 June 2019 | WO | 2019114434 | A1 | 20 June 2019 |
| | | | | EP | 3654269 | A1 | 20 May 2020 |
| | | | | TW | 201928815 | A | 16 July 2019 |
| | | | | EP | 3654269 | A4 | 18 November 2020 |
| | | | | SG | 11202001251 R | A | 30 March 2020 |
| | | | | US | 2020202219 | A1 | 25 June 2020 |
| | | | | TW | I715879 | B | 11 January 2021 |
| | | | | IN | 202047005821 | A | 01 May 2020 |
| CN | 108921566 | A | 30 November 2018 | None | | | |
| CN | 109191107 | A | 11 January 2019 | None | | | |
| US | 2019130116 | A1 | 02 May 2019 | TW | 201802732 | A | 16 January 2018 |
| | | | | JP | 2019525309 | A | 05 September 2019 |
| | | | | SG | 11201811395 Y | A | 30 January 2019 |
| | | | | KR | 102175226 | B1 | 09 November 2020 |
| | | | | CN | 107563757 | B | 22 September 2020 |
| | | | | EP | 3480769 | A1 | 08 May 2019 |
| | | | | CN | 107563757 | A | 09 January 2018 |
| | | | | KR | 20190025005 | A | 08 March 2019 |
| | | | | TW | I673666 | B | 01 October 2019 |
| | | | | EP | 3480769 | A4 | 27 November 2019 |
| | | | | WO | 2018001195 | A1 | 04 January 2018 |
| | | | | JP | 6697584 | B2 | 20 May 2020 |
| | | | | ID | 201903161 | A | 10 May 2019 |
| | | | | IN | 201847048878 | A | 03 May 2019 |

Form PCT/ISA/210 (patent family annex) (January 2015)

**REFERENCES CITED IN THE DESCRIPTION**

**Patent documents cited in the description**

- CN 202010720817